# EUROPÄISCHE PATENTSCHRIFT

(11) **EP 1 488 950 B1**
(45) Veröffentlichungstag und Bekanntmachung des Hinweises auf die Patenterteilung: **31.12.2008**
(21) Anmeldenummer: 04013080.9
(22) Anmeldetag: 03.06.2004
(51) Int. Cl.: B60N 2/06, B60N 2/10, B60N 2/20, B60N 2/22, B60N 2/30, B60N 2/36

(54) **Fahrzeugsitz, insbesondere Kraftfahrzeugsitz**
Vehicle seat, particularly motor vehicle seat
Siège de véhicule, en particulier siège d'automobile

(30) Priorität: 18.06.2003 DE 10328176
(43) Veröffentlichungstag der Anmeldung: 22.12.2004
(73) Patentinhaber: KEIPER GmbH & Co. KG, 67657 Kaiserslautern (DE)
(72) Erfinder: Kämmerer, Joachim, 67663 Kaiserslautern (DE)
(74) Vertreter: Patentanwälte Hosenthien-Held und Dr. Held

(56) Entgegenhaltungen:
- WO-A-00/41910
- DE-C1- 10 131 399
- FR-A- 2 580 914
- US-A- 4 046 349
- US-A1- 2002 171 282
- US-B1- 6 174 017

## Beschreibung

Die Erfindung betrifft einen Fahrzeugsitz, insbesondere einen Kraftfahrzeugsitz, mit den Merkmalen des Oberbegriffs des Anspruches 1.

Zur Überführung eines Fahrzeugsitzes in eine Einstiegsstellung ist es bekannt, dass die Lehne relativ zum Mittelbau freigeschwenkt und der längseinstellbare Fahrzeugsitz als Ganzes in die vorderste Sitzlängsposition verschoben wird. Ein Viergelenk dient beispielsweise der Höheneinstellung oder einer Überführung in eine flache Bodenstellung.

Aus der WO 00/41910 A1 ist ein Fahrzeugsitz der eingangs genannten Art bekannt, welcher von einer einsitzbaren Gebrauchsstellung in eine Einstiegsstellung überführbar ist, wofür das Viergelenk, welches aus dem Unterbau, dem Mittelbau und zwei Schwingen besteht, den Fahrzeugsitz als Ganzes freischwenkt, während die Lehne ihre Position relativ zum Mittelbau beibehält. Der Fahrzeugsitz ist auch von einer Gebrauchsstellung unter Vorklappen der Lehne in eine Bodenstellung überführbar, wofür die vordere Schwinge sich in einer Kulisse bewegt und das Sitzkissen relativ zum Unterbau absenkt. Vergleichbare Einstiegsstellungen sind aus der US 2002/0171282 A1, der FR 2 580 914 A1 und der US 4,046,349 bekannt. Ein Fahrzeugsitz, bei welchem das Sitzkissen vorne mittels einer Schwinge am Mittelbau und hinten an der am Mittelbau angelenkten Lehne angelenkt ist, wobei der Mittelbau um ein einfaches Gelenk nach oben geschwenkt werden kann, ist beispielsweise aus der US 6,174,017 B1 bekannt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Unter einer Einstiegsstellung soll eine solche Stellung des Fahrzeugsitzes verstanden werden, bei der zumindest die Lehne gegenüber der Vertikalen in Fahrtrichtung nach vorne (statt nach hinten) geneigt ist, vorzugsweise aber der gesamte Fahrzeugsitz nach vorne vorverlagert ist. Einer einfacher und raschen Überführung mit guter Zugänglichkeit der hinteren Sitzreihe wird der Vorzug gegeben gegenüber einer platzsparenden Endstellung.

Dadurch, dass zur Überführung des Fahrzeugsitzes von der Gebrauchsstellung in die Einstiegsstellung das Viergelenk den Fahrzeugsitz als Ganzes freischwenkt, während die Lehne ihre Position relativ zum Mittelbau beibehält, muß keine Längseinstellung und Lehneneinstellung mit Memoryfunktion vorgesehen werden, welche ansonsten bei der Rückkehr aus der Einstiegsstellung für das Auffinden der eingestellten Gebrauchsstellung notwendig sind. Zudem müssen keine zwei Bewegungen aufeinander abgestimmt werden. Beides verringert den Herstellungsaufwand und die Kosten hierfür. Das Auffinden der Ausgangsposition des Viergelenks gestaltet sich im Vergleich zum Auffinden der Sitzlängsposition und der Lehnenneigung einfacher, insbesondere wenn das Viergelenk keine weitere Funktion hat, also im Normalfall verriegelt ist und vorzugsweise lediglich für die Überführung des Fahrzeugsitzes in die Einstiegsstellung entriegelbar ist. Zum Verriegeln des Viergelenks sind zwischen zwei Getriebegliedern, beispielsweise zwischen dem Unterbau und dem Mittelbau, vorzugsweise ein Schloß und ein korrespondierendes Gegenelement vorgesehen. Vorzugsweise bilden zwei Schwingen die beiden anderen Getriebeglieder des Viergelenks, welche beispielsweise einander gegenüberliegend angeordnet sind.

Obwohl für diese Überführung in die Einstiegsstellung die Lehne nicht schwenkbar zu sein braucht, ist die Lehne relativ zum Mittelbau schwenkbar und verriegelbar, um zur Komfortsteigerung die Lehnenneigung individuell einstellen zu können und um den Fahrzeugsitz von der Gebrauchsstellung in eine Bodenstellung überführen zu können, wobei die Lehne nach vorne klappt.

Unter einer Bodenstellung soll eine solche Stellung des Fahrzeugsitzes verstanden werden, bei der zumindest die Lehne wenigstens näherungsweise nach vorne in die Horizontale geklappt und vorzugsweise auch das Sitzkissen abgesenkt oder weggeklappt ist, um Stauraum für die Lehne zu schaffen. Einer platzsparenden, flachen Endstellung wird der Vorzug gegeben gegenüber einer einfachen und raschen Überführung.

Eine besonders tiefe Bodenstellung ist erreichbar, wenn das Sitzkissen und der Mittelbau zwei Getriebeglieder eines zweiten Viergelenks bilden, welches beim Übergang des Fahrzeugsitzes in die Bodenstellung das Sitzkissen relativ zum Mittelbau absenkt, also durch eine bessere Raumausnutzung zusätzlich die Höhe des Fahrzeugsitz reduziert wird. Ein Abschnitt der Lehne und eine dritte Schwinge bilden vorzugsweise die beiden anderen Getriebeglieder des zweiten Viergelenks.

Obwohl für die Überführung in die Einstiegsstellung der Fahrzeugsitz nicht längseinstellbar zu sein braucht, ist es vorteilhaft, wenn der Fahrzeugsitz in eine andere Sitzlängsposition überführbar ist, um zur Komfortsteigerung die Sitzlängsposition individuell einstellen zu können und um beispielsweise bei der Überführung in die Einstiegsstellung eine weitere Vorverlagerung des Fahrzeugsitzes zu erreichen. Für die Längseinstellung ist vorzugsweise der Mittelbau oder der Unterbau auf jeder Fahrzeugsitzseite als Schienenpaar mit zwei Schienen ausgebildet, welche miteinander verriegelbar und zur Überführung des Fahrzeugsitzes in eine andere Sitzlängsposition entriegelbar und relativ zueinander verschiebbar sind.

Im folgenden ist die Erfindung anhand dreier in der Zeichnung dargestellter Ausführungsbeispiele näher erläutert. Es zeigen
- Fig. 1: eine schematische Seitenansicht des ersten Ausführungsbeispiels in der Designstellung,
- Fig. 2: eine Fig. 1 entsprechende Ansicht in einer anderen Sitzlängsposition,
- Fig. 3: eine Fig. 1 entsprechende Ansicht in der Bodenstellung,
- Fig. 4: eine Fig. 1 entsprechende Ansicht in der Einstiegsstellung,
- Fig. 5: eine schematische Seitenansicht des zweiten Ausführungsbeispiels in der Designstellung,
- Fig. 6: eine Fig. 5 entsprechende Ansicht in einer anderen Sitzlängsposition,
- Fig. 7: eine Fig. 5 entsprechende Ansicht in der Bodenstellung,
- Fig. 8: eine Fig. 5 entsprechende Ansicht in der Einstiegsstellung,
- Fig. 9: eine schematische Seitenansicht des dritten Ausführungsbeispiels in der Designstellung,
- Fig. 10: eine Fig. 9 entsprechende Ansicht in der Bodenstellung, und
- Fig. 11: eine Fig. 9 entsprechende Ansicht in der Einstiegsstellung.

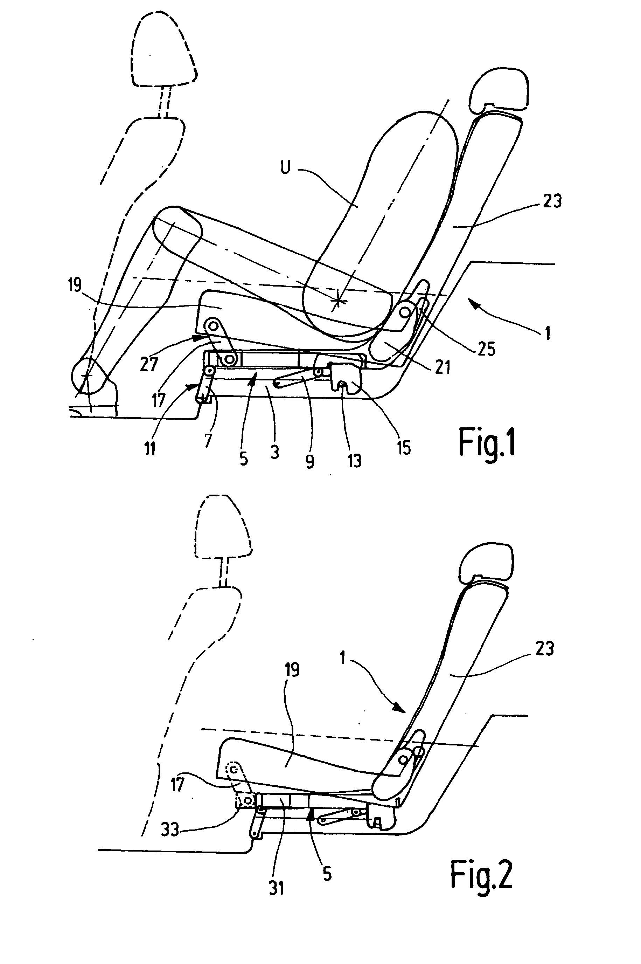

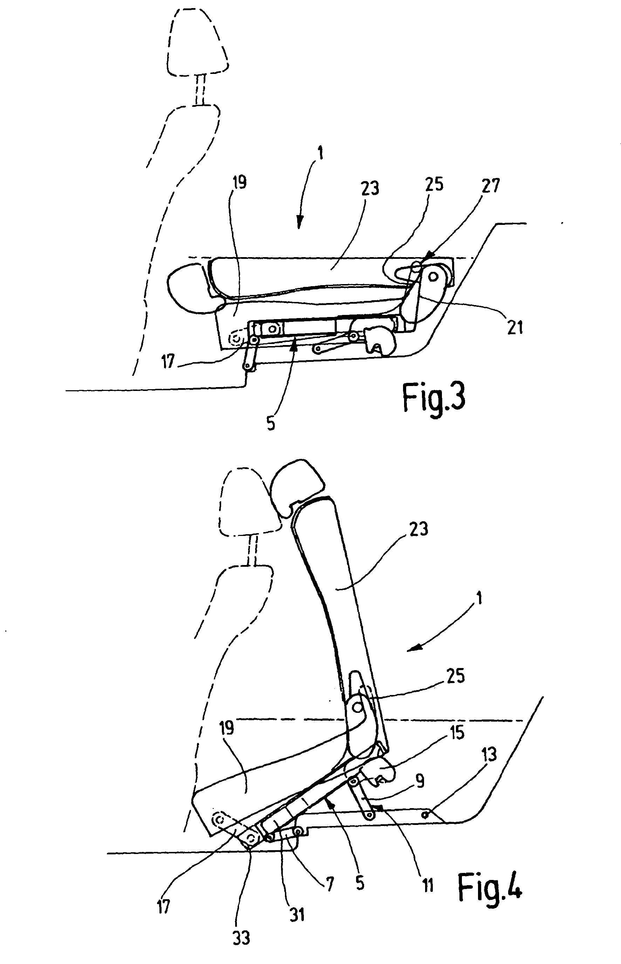

Im ersten Ausführungsbeispiel (Figuren 1-4) ist ein Fahrzeugsitz 1 für eine hintere Sitzreihe eines Kraftfahrzeuges vorgesehen, insbesondere für die zweite Sitzreihe eines Vans. Die Anordnung des Fahrzeugsitzes 1 innerhalb des Kraftfahrzeuges und dessen gewöhnliche Fahrtrichtung bestimmen die nachfolgend verwendeten Richtungsangaben. Auf jeder Fahrzeugsitzseite weist der Fahrzeugsitz 1 einen Unterbau 3, der mit der Fahrzeugstruktur verbunden wird, und einen Mittelbau 5 auf, der mittels einer ersten Schwinge 7 vorne und mittels einer zweiten Schwinge 9 ungefähr in der Mitte des Unterbaus 3 angelenkt ist, so daß der Unterbau 3, die beiden Schwingen 7 und 9 und der Mittelbau 5 als Getriebeglieder ein erstes Viergelenk 11 definieren. Am Unterbau 3 ist am hinteren Ende ein Bolzen 13 angebracht. Ein am Mittelbau 5 am hinteren Ende angebrachtes Schloß 15 verriegelt in einer zum Einsitzen für einen Benutzer U geeigneten Gebrauchsstellung des Fahrzeugsitzes 1 mit dem Bolzen 13, wodurch das erste Viergelenk 11 verriegelt ist.

Am vorderen Ende des Mittelbaus 5 ist mittels einer dritten Schwinge 17 eine vordere Ecke eines Sitzkissens 19 angelenkt. Unter dem Begriff "Sitzkissen" soll die ganze Baugruppe mit Struktur und Polster zu verstehen sein. Am hinteren Ende des Mittelbaus 5 ist ein neigungseinstellbarer Beschlag 21 angebracht, der jeweils eine Seite einer Lehne 23 trägt und die Lehnenschwenkachse definiert. Am hinteren Ende des Sitzkissens 19 ist ein sitzkissenstrukturfester Arm 25 vorgesehen, welcher an der Lehne 23 angelenkt ist. Die dritte Schwinge 17, das Sitzkissen 19 samt Arm 25, der Lehnenabschnitt zwischen der Anlenkstelle des Armes 25 und der Lehnenschwenkachse und der Mittelbau 5 definieren als Getriebeglieder ein zweites Viergelenk 27. Der ganze Fahrzeugsitz 1 ist im wesentlichen symmetrisch zu einer vertikalen Mittelebene aufgebaut, wobei die verschiedenen Anlenkstellen auf den beiden Fahrzeugsitzseiten miteinander fluchtende Achsen aufweisen.

Im vorliegenden ersten Ausführungsbeispiel ist der Mittelbau 5 als Seitenschienenpaar ausgebildet, d.h. er weist eine Innenschiene 31 und eine Außenschiene 33 auf, welche relativ zueinander in Längsrichtung verschiebbar und verriegelbar sind. An der Innenschiene 31 ist die erste Schwinge 7 angelenkt und das Schloß 15 mittels eines Adapters fest angebracht, an welchem auch die zweite Schwinge 9 angelenkt ist. An der Außenschiene 33 sind die dritte Schwinge 17, das Sitzkissen 19 und der Beschlag 21 angelenkt bzw. angebracht. Optional können die Schienen 31 und 33 auf den beiden Fahrzeugsitzseiten jeweils unter Bildung eines Rahmens miteinander verbunden sein.

Durch die Längseinstellerfunktion des Mittelbaus 5, d.h. durch Entriegeln und Verschieben der Außenschiene 33 relativ zur Innenschiene 31, ist die Sitzlängsposition des Fahrzeugsitzes 1 einstellbar, d.h. ausgehend von einer Gebrauchsstellung, beispielsweise der Designstellung, werden das Sitzkissen 19 und die Lehne 23 zusammen in Längsrichtung verschoben, wobei in der neuen Gebrauchsstellung die Schienen 31 und 33 wieder verriegelt werden.

Ferner kann der Fahrzeugsitz 1 zur Vergrößerung des Ladevolumens in eine flache Bodenstellung überführt werden. Hierzu wird ausgehend von einer Gebrauchsstellung, vorzugsweise der Designstellung, die Lehne 23 mittels des Beschlags 21 nach vorne in eine horizontale Tischstellung geklappt, wobei mittels einer erzwungenen Bewegung des zweiten Viergelenks 27, bei welcher die dritte Schwinge 17 nach vorne klappt, das Sitzkissen 19 relativ zum Mittelbau 5 nach vorne unten abgesenkt wird.

Schließlich kann der Fahrzeugsitz 1 zur besseren Zugänglichkeit der hinteren Sitzreihe in eine Einstiegsstellung gebracht werden. Hierzu wird ausgehend von einer Gebrauchsstellung, vorzugsweise der Designstellung, der Fahrzeugsitz 1 erst in die vorderste Sitzlängsposition gebracht und dann das Schloß 15 geöffnet, so daß das Schloß 15 sich vom Bolzen 13 lösen kann, und damit das erste Viergelenk 11 entriegelt ist. Durch Absenken der ersten Schwinge 7 nach unten und Vorschwenken der zweiten Schwinge 9 wird der gesamte Fahrzeugsitz 1 freigeschwenkt, insbesondere der die Lehne 23 mitnehmende Mittelbau 5 schräg nach vorne geklappt, wobei die Vorderkante des Mittelbaus 5 nach vorne und unten schwenkt. Ein gesondertes Freischwenken der Lehne 23 entfällt. Vielmehr behält diese ihre Position relativ zum Mittelbau 5 bei.

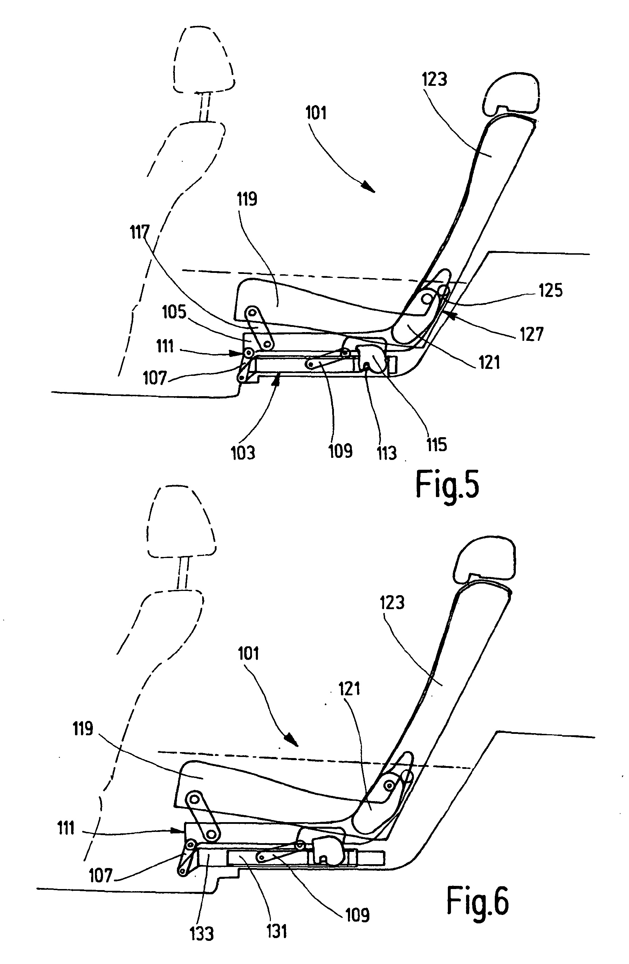

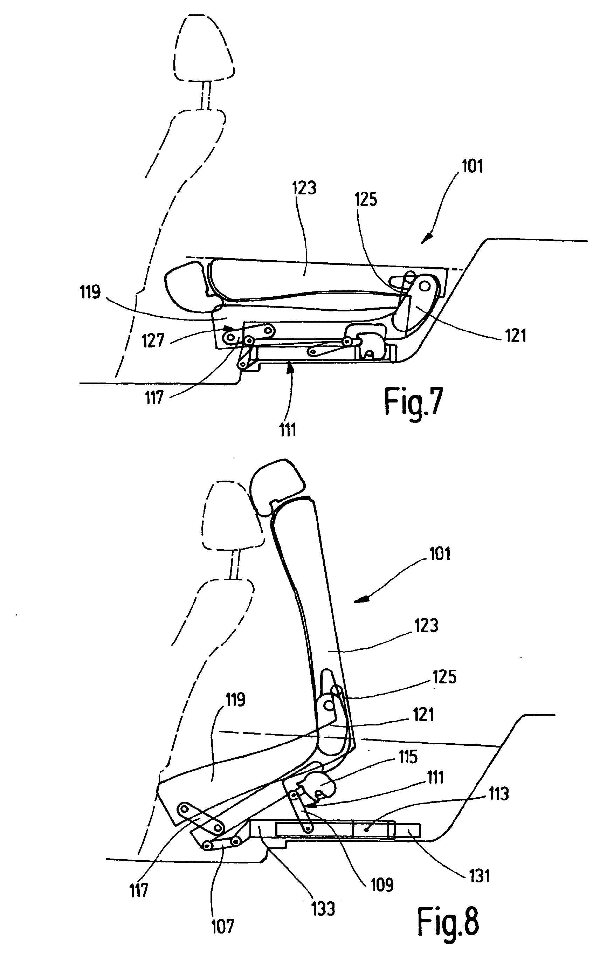

Das zweite Ausführungsbeispiel (Figuren 5-8) gleicht dem ersten Ausführungsbeispiel weitgehend, weshalb gleiche und gleichwirkende Bauteile um 100 höhere Bezugszeichen tragen. Bei diesem Fahrzeugsitz 101 sind der Unterbau 103 und der Mittelbau 105 in der nachfolgend beschriebenen Weise abgewandelt, während erste Schwinge 107, zweite Schwinge 109, Bolzen 113, Schloß 115, dritte Schwinge 117, Sitzkissen 119, Beschlag 121, Lehne 123 und Arm 125 mit den entsprechenden Bauteilen des ersten Ausführungsbeispiels übereinstimmen, wobei in gleicher Weise ein erstes Viergelenk 111 und ein zweites Viergelenk 127 definiert werden. Diesmal ist der Unterbau 103 als Schienenpaar ausgebildet, wobei die Innenschiene 131 mit der Fahrzeugstruktur verbunden ist, während an der Außenschiene 133 die Schwingen 107 und 109 angelenkt sind und der Bolzen 113 angebracht ist. Entsprechend ist der Mittelbau 105 einstückig ausgebildet.

Zur Längseinstellung, d.h. Änderung der Sitzlängsposition, wird die Außenschiene 133 entriegelt und verschoben, wobei das erste Viergelenk 111 und der Mittelbau 105 samt Aufbauten unverändert mitgenommen werden. Zum Übergang in die Bodenstellung wird entsprechend dem ersten Ausführungsbeispiel die Lehne 123 vorgeklappt und mittels des zweiten Viergelenks 127 das Sitzkissen 119 relativ zum Mittelbau 105 abgesenkt. Zum Übergang in die Einstiegsstellung wird wie beim ersten Ausführungsbeispiel der Fahrzeugsitz 101 in die vorderste Sitzlängsposition gebracht, dann das Schloß 115 entriegelt und der gesamte Fahrzeugsitz 101 durch eine Bewegung des ersten Viergelenks 111 freigeschwenkt, ohne daß ein gesondertes Freischwenken der Lehne 123 erfolgt.

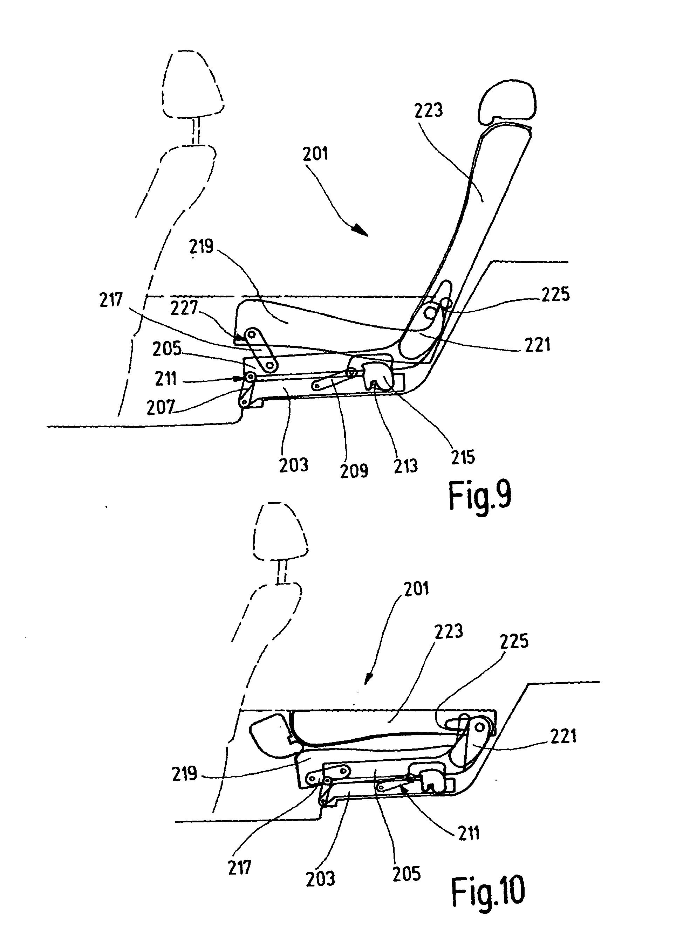

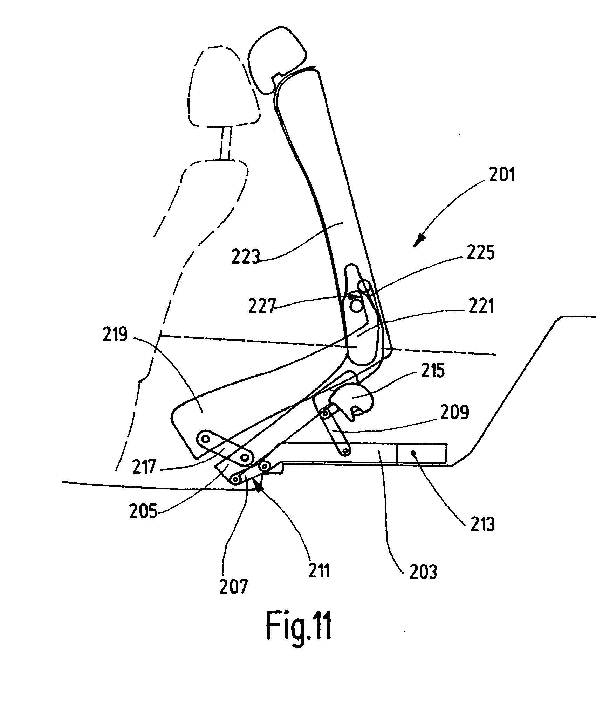

Das dritte Ausführungsbeispiel (Figuren 9-11) gleicht den beiden anderen Ausführungsbeispielen weitgehend, weshalb gleiche und gleichwirkende Bauteile um 200 bzw. 100 höhere Bezugszeichen tragen. Bei diesem Fahrzeugsitz 201 gleicht der Unterbau 203 demjenigen des ersten Ausführungsbeispiel, während Mittelbau 205 demjenigen des zweiten Ausführungsbeispiels gleicht. Erste Schwinge 207, zweite Schwinge 209, Bolzen 213, Schloß 215, dritte Schwinge 217, Sitzkissen 219, Beschlag 221, Lehne 223 und Arm 225 stimmen mit den entsprechenden Bauteilen der beiden anderen Ausführungsbeispielen überein, wobei in gleicher Weise ein erstes Viergelenk 211 und ein zweites Viergelenk 227 definiert werden.

Eine Längseinstellung ist nicht vorgesehen. Zum Übergang in die Bodenstellung wird entsprechend den beiden anderen Ausführungsbeispielen die Lehne 223 vorgeklappt und mittels des zweiten Viergelenks 227 das Sitzkissen 219 relativ zum Mittelbau 205 abgesenkt. Zum Übergang in die Einstiegsstellung wird wie beim ersten Ausführungsbeispiel das Schloß 215 entriegelt und der gesamte Fahrzeugsitz 201 durch eine Bewegung des ersten Viergelenks 211 freigeschwenkt, ohne daß ein gesondertes Freischwenken der Lehne 223 erfolgt.

### Bezugszeichenliste

- 1, 101, 201: Fahrzeugsitz
- 3, 103, 203: Unterbau
- 5, 105, 205: Mittelbau
- 7, 107, 207: erste Schwinge
- 9, 109, 209: zweite Schwinge
- 11, 111,211: erstes Viergelenk
- 13, 113, 113: Bolzen
- 15,115,215: Schloß
- 17, 117, 217: dritte Schwinge
- 19, 119,219: Sitzkissen
- 21, 121, 221: Beschlag
- 23, 123, 223: Lehne
- 25, 125, 225: Arm
- 27, 127, 227: zweites Viergelenk
- 31, 131: Innenschiene
- 33, 133: Außenschiene
- U: Benutzer

## Patentansprüche

1. Fahrzeugsitz, insbesondere Kraftfahrzeugsitz, mit einem Unterbau (3; 103; 203), der mit der Fahrzeugstruktur zu verbinden ist, und einem Mittelbau (5; 105; 205), der ein Sitzkissen (19; 119; 219) und eine relativ zum Mittelbau (5; 105; 205) schwenkbare und verriegelbare Lehne (23; 123; 223) trägt, wobei der Unterbau (3; 103; 203) und der Mittelbau (5; 105; 205) zwei Getriebeglieder eines ersten Viergelenks (11; 111; 211) auf jeder Fahrzeugsitzseite bilden, und wobei der Fahrzeugsitz (1; 101; 201) von einer einsitzbaren Gebrauchsstellung in eine Einstiegsstellung überführbar ist, wofür das Viergelenk (11; 111; 211) den Fahrzeugsitz (1; 101; 201) als Ganzes freischwenkt, während die Lehne (23; 123; 223) ihre Position relativ zum Mittelbau (5; 105; 205) beibehält, und wobei der Fahrzeugsitz (1; 101; 201) von der Gebrauchsstellung in eine Bodenstellung überführbar ist, wofür die Lehne (23; 123; 223) nach vorne klappt, **dadurch gekennzeichnet, dass** das Sitzkissen (19; 119; 219) und der Mittelbau (5; 105; 205) zwei Getriebeglieder eines zweiten Viergelenks (27; 127; 227) bilden, welches beim Übergang des Fahrzeugsitzes (1; 101; 201) in die Bodenstellung das Sitzkissen (19; 119; 219) relativ zum Mittelbau (5; 105; 205) absenkt.

2. Fahrzeugsitz nach Anspruch 1, **dadurch gekennzeichnet, dass** das erste Viergelenk (11; 111; 211) in der Gebrauchsstellung verriegelt ist und für die Überführung des Fahrzeugsitzes (1; 101; 201) in die Einstiegsstellung entriegelbar ist.

3. Fahrzeugsitz nach Anspruch 2, **dadurch gekennzeichnet, dass** zum Verriegeln des ersten Viergelenks (11; 111; 211) zwischen Unterbau (3; 103; 203) und Mittelbau (5; 105; 205) ein Schloß (15; 115; 215) vorgesehen ist.

4. Fahrzeugsitz nach einem der Ansprüche 1 bis 3, **dadurch gekennzeichnet, dass** zwei Schwingen (7, 9; 107, 109; 207, 209) die beiden anderen Getriebeglieder des ersten Viergelenks (11; 111; 211) bilden.

5. Fahrzeugsitz nach einem der Ansprüche 1 bis 4, **dadurch gekennzeichnet, dass** ein Abschnitt der Lehne (23; 123; 223) und eine dritte Schwinge (17; 117; 217) die beiden anderen Getriebeglieder des zweiten Viergelenks (27; 127; 227) bilden.

6. Fahrzeugsitz nach Anspruch 5, **dadurch gekennzeichnet, dass** am hinteren Ende des Sitzkissens (19; 119; 219) ein sitzkissenstrukturfester Arm (25,125,225) vorgesehen ist, welcher an der Lehne (23; 123; 223) angelenkt ist.

7. Fahrzeugsitz nach einem der Ansprüche 1 bis 6, **dadurch gekennzeichnet, dass** der Fahrzeugsitz (1; 101) in eine andere Sitzlängsposition überführbar ist.

8. Fahrzeugsitz nach Anspruch 7, **dadurch gekennzeichnet, dass** der Mittelbau (5) oder der Unterbau (103) auf jeder Fahrzeugsitzseite als Schienenpaar mit zwei Schienen (31, 33; 131, 133) ausgebildet ist, welche miteinander verriegelbar und zur Überführung des Fahrzeugsitzes (1; 101) in eine andere Sitzlängsposition entriegelbar und relativ zueinander verschiebbar sind.

## Claims

1. A vehicle seat, in particular a motor-vehicle seat, having an understructure (3; 103; 203) which is to be connected to the vehicle structure, and a middle structure (5; 105; 205) carrying a seat cushion (19; 119; 219) and a backrest (23; 123; 223) which is lockable and pivotable relative to the middle structure (5; 105; 205), wherein the understructure (3; 103; 203) and the middle structure (5; 105; 205) form two links of a first four-link mechanism (11; 111; 211) on either side of the vehicle seat, and wherein the vehicle seat (1; 101; 201) is movable from a sitting position of use into a boarding position, for which purpose the four-link mechanism (11; 111; 211) freely pivots the vehicle seat (1; 101; 201) as a whole, while the backrest (23; 123; 223) maintains its position relative to the middle structure (5; 105; 205), and wherein the vehicle seat (1; 101; 201) is movable from the position of use into a floor position, for which purpose the backrest (23; 123; 223) tilts forwards, **characterised in that** the seat cushion (19; 119; 219) and the middle structure (5; 105; 205) form two links of a second four-link mechanism (27; 127; 227) which lowers the seat cushion (19; 119; 219) relative to the middle structure (5; 105; 205) when the vehicle seat (1; 101; 201) is moved into the floor position.

2. A vehicle seat according to claim 1, **characterised in that** the first four-link mechanism (11; 111; 211) is locked in the position of use and can be unlocked for moving the vehicle seat (1; 101; 201) into the boarding position.

3. A vehicle seat according to claim 2, **characterised in that** a lock (15; 115; 215) is provided between the understructure (3; 103; 203) and the middle structure (5; 105; 205) in order to lock the first four-link mechanism (11; 111; 211).

4. A vehicle seat according to any one of claims 1 to 3, **characterised in that** two rockers (7, 9; 107, 109; 207, 209) form the two other links of the first four-link mechanism (11; 111; 211).

5. A vehicle seat according to any one of claims 1 to 4, **characterised in that** a portion of the backrest (23; 123; 223) and a third rocker (17; 117; 217) form the two other links of the second four-link mechanism (27; 127; 227).

6. A vehicle seat according to claim 5, **characterised in that** at the rear end of the seat cushion (19; 119; 219) an arm (25; 125; 225) is provided which is fixed to the seat-cushion structure and is articulated on the backrest (23; 123; 223).

7. A vehicle seat according to any one of claims 1 to 6, **characterised in that** the vehicle seat (1; 101) can be moved into another longitudinal position of the seat.

8. A vehicle seat according to claim 7, **characterised in that** the middle structure (5) or the understructure (103) on either side of the vehicle seat is in the form of a pair of rails comprising two rails (31, 33; 131, 133) that can be locked together and, in order to move the vehicle seat (1; 101) into another longitudinal position of the seat, can be unlocked and displaced relative to one another.

## Revendications

1. Siège de véhicule, en particulier siège de véhicule automobile, comportant un châssis (3 ; 103 ; 203), qui doit être relié avec la structure du véhicule, et un corps central (5 ; 105 ; 205), qui porte un coussin de siège (19 ; 119 ; 219) et un dossier (23 ; 123 ; 223) basculable et verrouillable par rapport au corps central (5 ; 105 ; 205), le châssis (3 ; 103, 203) et le corps central (5 ; 105 ; 205) formant deux éléments d'entraînement d'un premier quadrilatère articulé (11 ; 111 ; 211) sur chaque côté du siège de véhicule, et le siège de véhicule (1 ; 101 ; 201) étant transformable d'une position d'utilisation permettant de s'asseoir en une position de montée, pour laquelle le quadrilatère articulé (11 ; 111 ; 211) conserve sa position par rapport au corps central (5 ; 105 ; 205), et le siège de véhicule (1 ; 101 ; 201) étant transformable de la position d'utilisation dans la position basse, pour laquelle le dossier (23 ; 123 ; 223) se plie vers l'avant, **caractérisé par le fait que** le coussin de siège (19 ; 119 ; 219) et le corps central (5 ; 105 ; 205) forme deux éléments d'entraînement d'un second quadrilatère articulé (27 ; 127 ; 227), lequel, lors du passage du siège de véhicule (1 ; 101 ; 201) dans la position de plancher, abaisse le coussin de siège (19 ; 119 ; 219) par rapport au corps central (5 ; 105 ; 205).

2. Siège de véhicule selon la revendication 1, **caractérisé par le fait que** le premier quadrilatère articulé (11 ; 111 ; 211) est verrouillé dans la position d'utilisation et est déverrouillable pour le passage du siège de véhicule (1; 101 ; 201) dans la position de montée.

3. Siège de véhicule selon la revendication 2, **caractérisé par le fait que**, pour le verrouillage du premier quadrilatère articulé (11 ; 111 ; 211) entre le châssis (3 ; 103 ; 203) et le corps central (5 ; 105 ; 205) est prévue une serrure (15 ; 115 ; 215).

4. Siège de véhicule selon l'une des revendications 1 à 3, **caractérisé par le fait que** deux bielles oscillantes (7, 9 ; 107, 109 ; 207, 209) forment les deux autres éléments d'entraînement du premier quadrilatère articulé (11 ; 111 ; 211).

5. Siège de véhicule selon l'une des revendications 1 à 4, **caractérisé par le fait qu'**une section du dossier (23 ; 123 ; 223) et une troisième bielle oscillante (17 ; 117 ; 217) forment les deux autres éléments d'entraînement du deuxième quadrilatère articulé (27 ; 127 ; 227).

6. Siège de véhicule selon la revendication 5, **caractérisé par le fait que**, sur l'extrémité arrière du coussin de siège (19 ; 119 ; 219) est prévu un bras (25, 125, 225) solidaire de la structure du coussin de siège, lequel est articulé sur le dossier (23 ; 123 ; 223).

7. Siège de véhicule selon l'une des revendications 1 à 6, **caractérisé par le fait que** le siège de véhicule (1 ; 101) est transférable dans une autre position longitudinale de siège.

8. Siège de véhicule selon la revendication 7, **caractérisé par le fait que** le corps central (5) ou le châssis (103) sur chaque côté du siège de véhicule est réalisé sous la forme d'une paire de rails avec deux rails (31, 33 ; 131, 133), lesquels sont verrouillables réciproquement et, pour le transfert du siège de véhicule (1 ; 101) dans une autre position longitudinale de siège sont déverrouillables et déplaçables l'un par rapport à l'autre.
